# EUROPEAN PATENT APPLICATION

(11) **EP 4 502 236 A1**
(43) Date of publication of application: **05.02.2025**
(21) Application number: 23882887.5
(22) Date of filing: 12.09.2023
(51) Int. Cl.: C25B 3/26, C25B 1/23, C25B 15/08, C25B 9/19

(54) **CARBON DIOXIDE CONVERSION SYSTEM**

(30) Priority: 28.10.2022 KR 20220141206
(71) Applicant: Techwin Co., Ltd., Cheongju-si, Chungcheongbuk-do 28580 (KR)
(72) Inventor: KIM, Jung Sik, Sejong 30098 (KR); SHIN, Hyun Su, Daejeon 34390 (KR); HYUN, Sun Teak, Cheongju-si, Chungcheongbuk-do 28582 (KR)
(74) Representative: BCKIP Part mbB
(86) International application number: PCT/KR2023/013641
(87) International publication number: WO 2024/090780

(57) **Abstract**

An aspect of the present invention provides a carbon dioxide conversion system including a negative electrode chamber in which a reduction reaction of carbon dioxide is performed and a positive electrode chamber in which an oxidation reaction of hydrogen is performed.

## Description

### [Technical Field]

The present invention relates to a carbon dioxide conversion system, and more particularly, to a carbon dioxide conversion system that has excellent energy efficiency, minimizes hydrogen purification equipment, and is capable of producing a high-purity product.

### [Background Art]

In recent years, the impact of climate change on the Earth has increased. Accordingly, countries around the world are trying to reduce various causes of global warming. In particular, carbon dioxide has drawn a great attention as carbon dioxide emissions have rapidly increased due to industrial development.

Thermoelectric power plants, steel mills, and cement plants, which use fossil fuel, generate a large amount of carbon dioxide. The technology to capture, store, and dispose of carbon dioxide generated at these facilities is called carbon capture and storage (CCS). In addition, research is being actively conducted on carbon capture and utilization (CCU), a technology that stores carbon dioxide and recycles it through a conversion process. Carbon capture utilization and storage (CCUS) technology, which combines the above technologies, is essential for achieving carbon neutrality, which is the goal of the Paris Agreement.

Carbon dioxide utilization methods are largely divided into two types: a nonconversion method utilizing carbon dioxide as is and a conversion method converting carbon dioxide into a useful compound for reuse. Among them, the carbon dioxide conversion technology can be classified into chemical conversion technology and biological conversion technology. Chemical conversion technology includes thermocatalytic chemical conversion, electrochemical conversion, and photochemical conversion, etc. depending on technical characteristics.

Electrochemical conversion technology supplies carbon dioxide into an aqueous solution of an electrolysis device and reduces the carbon dioxide with electrical energy to convert it into an organic compound. Depending on the type of electrode materials and reaction conditions, an organic compound such as formic acid, methane, ethane, carbon monoxide, oxalic acid, and synthetic gas can be selectively produced. Such electrochemical conversion technology can be performed even under room temperature and normal pressure conditions. In addition, the raw materials required for reaction are simply an electrolyte and carbon dioxide, and conversion without chemical emissions is possible by recycling the electrolyte. Also, since the system is simple and can be modularized, research and development is being conducted in various ways.

In the electrolysis device, hydrogen gas generated as a side reaction product is mixed with unreacted carbon dioxide. Thus, in order to recover and reuse unreacted carbon dioxide, it is necessary to separate hydrogen.

Conventionally, a gas-liquid separator, a membrane, a compressor, etc. were used to separate the generated by-product hydrogen from unreacted carbon dioxide. However, when using the above equipment, there are problems such as increased costs and significant space constraints. In addition, separating hydrogen and carbon dioxide using a membrane was inefficient, and thus the actual recovery/recirculation rate of carbon dioxide was insufficient.

### [Disclosure]

### [Technical Problem]

The present invention is intended to overcome the problems of the related art described above. The object of the present invention is to provide a carbon dioxide conversion system that has excellent energy efficiency and is capable of producing a high-purity product by oxidizing by-product hydrogen in the process of converting carbon dioxide through an electrochemical reduction reaction.

### [Technical Solution]

One aspect of the present invention provides a carbon dioxide conversion system including a negative electrode chamber in which a reduction reaction of carbon dioxide is performed and a positive electrode chamber in which an oxidation reaction of hydrogen is performed.

In an embodiment, the carbon dioxide conversion system may further include a carbon dioxide supply unit that supplies carbon dioxide to the negative electrode chamber; a recirculation unit that supplies the discharge from the negative electrode chamber to the positive electrode chamber; and a diaphragm interposed between the negative electrode chamber and the positive electrode chamber.

In an embodiment, the carbon dioxide conversion system may further include a carbon dioxide supply unit that supplies carbon dioxide to the negative electrode chamber; a first separation unit that separates the discharge from the negative electrode chamber into a first component and a second component; a first collection unit that collects the first component from the first separation unit; a recirculation unit that supplies the second component from the first separation unit to the positive electrode chamber; and a diaphragm interposed between the negative electrode chamber and the positive electrode chamber. In an embodiment, at least one selected from the group consisting of hydrogen, carbon monoxide, formic acid, formaldehyde, methanol, methane, and ethylene may be generated in the negative electrode chamber.

In an embodiment, the redox potential based on the standard electrode potential between the negative electrode chamber and the positive electrode chamber may have an absolute value of 1.23 V or less.

In an embodiment, the carbon dioxide supply unit may supply at least one selected from the group consisting of dry carbon dioxide, humidified carbon dioxide, and dissolved carbon dioxide.

In an embodiment, the carbon dioxide conversion system may further include at least one of a hydrogen supply unit that supplies hydrogen to the positive electrode chamber and an electrolyte supply unit that supplies an electrolyte to the positive electrode chamber.

In an embodiment, the carbon dioxide conversion system may further include a second collection unit that collects the discharge from the positive electrode chamber.

In an embodiment, the first separation unit may include at least one selected from the group consisting of a gas-liquid separator, a gas purifier, an adsorption tower, an absorption tower, and a gas permeable membrane.

In an embodiment, the first separation unit may discharge hydrogen and unreacted carbon dioxide as the second component, and the discharge from the positive electrode chamber may be recirculated to the carbon dioxide supply unit.

In an embodiment, the carbon dioxide conversion system may further include a second separation unit that separates hydrogen and unreacted carbon dioxide, wherein the first separation unit may discharge hydrogen and unreacted carbon dioxide to the second separation unit, the second separation unit may supply the hydrogen to the recirculation unit, the second separation unit may recirculate the unreacted carbon dioxide to the carbon dioxide supply unit, and the recirculation unit may supply the hydrogen from the second separation unit to the positive electrode chamber.

In an embodiment, the carbon dioxide conversion system may further include a second separation unit that separates hydrogen and other components from the discharge of the negative electrode chamber, wherein the second separation unit may supply the hydrogen to the recirculation unit, the recirculation unit may supply the hydrogen from the second separation unit to the positive electrode chamber, the second separation unit may discharge the other components to the first separation unit, the first separation unit may separate the discharge from the second separation unit into a first component and a second component, and the first separation unit may recirculate unreacted carbon dioxide to the carbon dioxide supply unit.

### [Advantageous Effects]

According to one aspect of the present invention, the purification process can be omitted or minimized, and by-product hydrogen can be removed.

According to another aspect of the present invention, energy efficiency can be improved by minimizing the voltage difference in an electrochemical reaction.

According to still another aspect of the present invention, a product manufactured through a carbon dioxide conversion system can be obtained with high purity.

The effects of the present invention are not limited to the above-described effects and should be understood to include all effects that can be inferred from the configuration of the invention described in the detailed description or the claims of the present invention.

### [Description of Drawings]

FIG. 1 illustrates an example of a carbon dioxide conversion system according to an embodiment of the present invention.
FIG. 2 illustrates an example of a carbon dioxide conversion system according to another embodiment of the present invention.
FIG. 3 illustrates an example of a carbon dioxide conversion system according to still another embodiment of the present invention.
FIG. 4 illustrates an example of a carbon dioxide conversion system according to yet another embodiment of the present invention.
FIG. 5 illustrates an example of a carbon dioxide conversion system according to yet another embodiment of the present invention.

### [Modes of the Invention]

Hereinafter, the present invention will be described with reference to the attached drawings. However, the present invention may be implemented in various forms and thus is not limited to the embodiments described herein. In order to clearly explain the present invention in the drawings, parts unrelated to the description are omitted, and similar parts are given similar reference numerals throughout the specification.

In this specification, when a part is said to be "connected" to another part, this includes not only the case where it is "directly connected," but also the case where it is "indirectly connected" with a member therebetween. In addition, when a part is said to "include" a certain component, this means that other components can be added, rather than excluding other components, unless specifically stated to the contrary.

In this specification, "standard electrode potential" refers to the potential measured in a battery manufactured by combining a standard hydrogen electrode and the electrode to be measured under the conditions of 25 °C, 1 atm, and an ion concentration of 1 M.

Hereinafter, embodiments of the present invention will be described in detail with reference to the attached drawings.

### Carbon dioxide conversion system

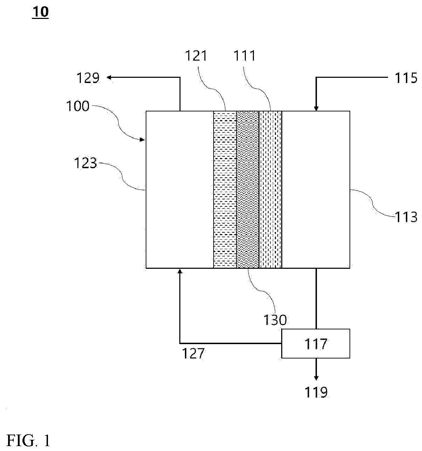

FIG. 1 illustrates an embodiment of a carbon dioxide conversion system 10 according to one aspect of the present invention.

Referring to FIG. 1, the carbon dioxide conversion system 10 according to one aspect of the present invention may include a negative electrode chamber 113 in which a reduction reaction of carbon dioxide is performed and a positive electrode chamber 123 in which an oxidation reaction of hydrogen is performed.

The carbon dioxide conversion system 10 may convert carbon dioxide, a type of greenhouse gas, into a useful compound using a small amount of energy in an electrolytic cell 100 provided with a negative electrode chamber 113 including a negative electrode 111 and a positive electrode chamber 123 including a positive electrode 121. Unlike conventional electrolysis devices that use a large amount of energy to perform the redox reaction of carbon dioxide and water, and purify and remove by-product hydrogen, the carbon dioxide conversion system 10 may utilize the redox reaction of carbon dioxide and hydrogen.

In one embodiment of the carbon dioxide conversion system 10, a carbon dioxide supply unit 115 that supplies carbon dioxide to the negative electrode chamber 113, a recirculation unit 127 that supplies the discharge from the negative electrode chamber 113 to the positive electrode chamber 123, and a diaphragm 130 interposed between the negative electrode chamber 113 and the positive electrode chamber 123 may be further included.

In another embodiment of the carbon dioxide conversion system 10, a carbon dioxide supply unit 115 that supplies carbon dioxide to the negative electrode chamber 113, a first separation unit 117 that separates the discharge from the negative electrode chamber 113 into a first component and a second component, a first collection unit 119 that collects the first component from the first separation unit 117, a recirculation unit 127 that supplies the second component from the first separation unit 117 to the positive electrode chamber 123, and a diaphragm 130 interposed between the negative electrode chamber 113 and the positive electrode chamber 123 may be further included.

In one example of the carbon dioxide conversion system 10 described above, materials may flow into the negative electrode chamber 113 from the carbon dioxide supply unit 115. Materials in the negative electrode chamber 113 may be discharged to the positive electrode chamber 123 through the recirculation unit 127 or may be discharged to the first separation unit 117. When the materials discharged from the negative electrode chamber 113 pass through the first separation unit 117, they are separated into a first component and a second component and discharged into the first collection unit 119 and the recirculation unit 127, respectively. The materials that have passed through the recirculation unit 127 may be supplied to the positive electrode chamber 123. Materials in the positive electrode chamber 123 may be allowed to completely react or may be discharged through the second collection unit 129, which is an optional configuration.

The carbon dioxide conversion system 10 may include an electrolytic cell 100 in which the negative electrode chamber 113 including the negative electrode 111 and the positive electrode chamber 123 including the positive electrode 121 are partitioned by the diaphragm 130.

A reduction reaction of carbon dioxide may occur at the negative electrode 111 of the carbon dioxide conversion system 10. Examples of the negative electrode 111 may be an electrode including at least one selected from the group consisting of Hg, Ti, In, Sn, Cd, Au, Ag, Zn, Pd, and Cu, but are not limited thereto.

According to an embodiment, the reaction performed in the negative electrode chamber 113 including the negative electrode 111 may be expressed as the following reaction formulas (1) to (8).

### <Reaction Formulas>

(1) CO₂ + 2H⁺ + 2e⁻ → CO + H₂O

(2) CO₂ + 2H⁺ + 2e⁻ → HCOOH

(3) CO₂ + 4H⁺ + 4e⁻ → HCHO + H₂O

(4) CO₂ + 6H⁺ + 6e⁻ → CH₃OH + H₂O

(5) CO₂ + 8H⁺ + 8e⁻ → CH₄ + 2H₂O

(6) 2CO₂ + 12H⁺ + 12e⁻ → C₂H₄ + 4H₂O

(7) 2H₂O + 2e⁻ → H₂ + 2OH⁻

(8) 2H⁺ + 2e⁻ → H₂

Reaction Formula (1) is a reaction in which carbon dioxide (CO₂) is converted to carbon monoxide (CO) and has a standard electrode potential of -0.53 V. Reaction Formula (2) is a reaction in which carbon dioxide (CO₂) is converted to formic acid (HCOOH) and has a standard electrode potential of -0.61 V. Reaction Formula (3) is a reaction in which carbon dioxide (CO₂) is converted to formaldehyde (HCHO) and has a standard electrode potential of -0.51 V. Reaction Formula (4) is a reaction in which carbon dioxide (CO₂) is converted to methanol (CH₃OH) and has a standard electrode potential of -0.38 V. Reaction Formula (5) is a reaction in which carbon dioxide (CO₂) is converted to methane (CH₄) and has a standard electrode potential of -0.24 V. Reaction Formula (6) is a reaction in which carbon dioxide (CO₂) is converted to ethylene (C₂H₄) and has a standard electrode potential of -0.34 V.

Reaction Formula (7) is a reaction in which water (H₂O) is converted to hydrogen (H₂) and has a standard electrode potential of -0.83 V, and Reaction Formula (8) is a reaction in which hydrogen (H₂) is generated from hydrogen cations (H⁺) and has a standard electrode potential of 0 V.

These reactions may be induced in a desired form by varying the type of negative electrode 111 and reaction conditions.

In the negative electrode chamber 113, carbon dioxide may undergo an electrochemical reduction reaction to generate at least one selected from the group consisting of hydrogen (H₂), carbon monoxide (CO), formic acid (HCOOH), formaldehyde (HCHO), methanol (CH₃OH), methane (CH₄), and ethylene (C₂H₄), but is not limited thereto.

An oxidation reaction of hydrogen may occur at the positive electrode 121 of the carbon dioxide conversion system 10. Examples of the positive electrode 121 may be an Fe electrode, a stainless steel (SUS) electrode, a Ni electrode, a Ti electrode, and a catalytic oxide electrode coated with platinum-based oxides such as Ru, Ir, Ta, and Pt on a Ti substrate, but are not limited thereto.

The reaction performed in the positive electrode chamber 123 including the positive electrode 121 may be expressed as Reaction Formula (9) below.

### <Reaction Formula>

(9) H₂ → 2H⁺ + 2e⁻

Reaction Formula (9) is the reverse reaction of Reaction Formula (8) and has a standard electrode potential of 0 V. Therefore, the absolute value of the redox potential based on the standard electrode potential between the negative electrode chamber 113 and the positive electrode chamber 123 may be 1.23 V or less, for example, 1.23 V or less, 1.20 V or less, 1.15 V or less, 1.10 V or less, 1.05 V or less, 1.00 V or less, 0.95 V or less, 0.90 V or less, 0.85 V or less, 0.80 V or less, 0.75 V or less, 0.70 V or less, or 0.65 V or less, but is not limited thereto. When the absolute value of the redox potential is small, it is possible to convert carbon dioxide with a smaller amount of electrical energy.

The negative electrode 111 and the positive electrode 121 may perform redox reactions by receiving electrical energy from an external power source. Thus, the lower the energy required for the electrochemical carbon dioxide conversion reaction of the negative electrode 111 and the positive electrode 121, the better the efficiency. This energy may be expressed as the difference in standard electrode potential between the negative electrode 111, which is a reduction electrode, and the positive electrode 121, which is an oxidization electrode.

The positive electrode chamber 123 may further include a predetermined catalyst so that the reaction according to Reaction Formula (9) is easily performed. The catalyst may include, for example, at least one platinum-based element selected from the group consisting of Pt, Pd, Ru, Ir, and Rh and/or a transition metal element such as Ni, Cu, Fe, or a mixture of these components, but is not limited thereto.

Conventional carbon capture and utilization technology uses the decomposition reaction of water, as shown in Reaction Formula (P) below, in the positive electrode chamber.

### <Reaction Formula>

(P) H₂O → 1/2O₂ + 2H⁺ + 2e⁻

As the standard electrode potential of Reaction Formula (P) is 1.23 V, a voltage of 1.47 V to 2.06 V needs to be applied when connecting to the negative electrode chamber to convert carbon dioxide.

On the other hand, since the carbon dioxide conversion system 10 utilizes the oxidation reaction of hydrogen at the positive electrode 121, it is possible to convert carbon dioxide even when a relatively low voltage of 1.23 V or less is applied, thereby achieving excellent energy efficiency.

In addition, compared to the conventional system in which hydrogen needs to be removed through a purification process, hydrogen is directly used in the carbon dioxide conversion reaction, and thus purification equipment may be minimized.

The negative electrode chamber 113 and the positive electrode chamber 123 may each include an electrolyte. The electrolyte may impart conductivity to the negative electrode chamber 113 or the positive electrode chamber 123 and transfer electrical energy to perform the electrochemical redox reaction described above. Generally, the electrochemical reduction reaction may be performed in an aqueous solution. Therefore, the electrolyte may be an ionic compound dissociated in water. The electrolytes in the negative electrode chamber 113 and the positive electrode chamber 123 may be the same or different depending on the purpose.

The carbon dioxide supply unit 115 may supply carbon dioxide to the negative electrode chamber 113 to perform the above-described reduction reaction of carbon dioxide. The carbon dioxide supply unit 115 may supply carbon dioxide to the electrolyte in the negative electrode chamber 113 or may supply carbon dioxide in a dissolved state in the electrolyte. For example, the carbon dioxide supply unit 115 may supply at least one selected from the group consisting of dry carbon dioxide, humidified carbon dioxide, and dissolved carbon dioxide to the negative electrode chamber 113, but is not limited thereto.

In this case, in order for carbon dioxide to be more easily dissolved in the electrolyte, carbon dioxide may be supplied to the electrolyte at high pressure, carbon dioxide may be supplied in the form of fine bubbles, or carbon dioxide may be supplied through a membrane contact method, but the method is not limited thereto.

In addition to the supplied carbon dioxide (CO₂), the negative electrode chamber 113 may further include at least one selected from the group consisting of hydrogen (H₂), carbon monoxide (CO), formic acid (HCOOH), formaldehyde (HCHO), methanol (CH₃OH), methane (CH₄), and ethylene (C₂H₄), generated by the above-described reaction. The negative electrode chamber 113 may discharge materials including the above compounds into the positive electrode chamber 123 or the first separation unit 117. The first separation unit 117 may separate the materials discharged from the negative electrode chamber 113 into the first component and the second component.

Accordingly, the second component that has passed through the first separation unit 117 may include hydrogen generated in the negative electrode chamber 113. The hydrogen may be supplied to the positive electrode chamber 123 through the recirculation unit 127. Hydrogen supplied to the positive electrode chamber 123 may be converted into hydrogen cations and electrons through the oxidation reaction described above.

In an example, when the first component that has passed through the first separation unit 117 includes an electrolyte, the electrolyte may be recirculated to the negative electrode chamber 113. In an example, the electrolyte may be recirculated in a state in which carbon dioxide is dissolved through the carbon dioxide supply unit 115.

The diaphragm 130 may partition the negative electrode chamber 113 and the positive electrode chamber 123. The diaphragm 130 can selectively move a desired material while separating the negative electrode chamber 113 and the positive electrode chamber 123 in the electrolytic cell 100.

The diaphragm 130 may be an ion exchange membrane, for example, a cation exchange membrane or an anion exchange membrane. When the diaphragm 130 is a cation exchange membrane, the surface facing the negative electrode chamber 113 may have shielding properties against anions or may have a cation exchange functional group, but is not limited thereto.

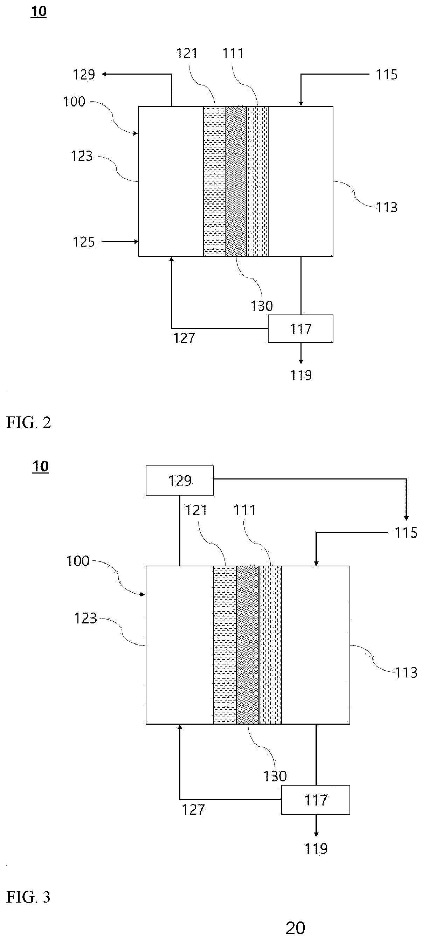

In order for the above-described oxidation reaction of hydrogen to occur at the positive electrode 121, it is necessary to continuously supply hydrogen to the positive electrode chamber 123. When carbon dioxide is reduced only with by-product hydrogen generated in the negative electrode chamber 113 through a competitive reaction, the amount of hydrogen required for the reaction may be insufficient. In this case, the carbon dioxide conversion system 10 may further include a hydrogen supply unit 125 that supplies hydrogen to the positive electrode chamber 123. FIG. 2 illustrates an embodiment of this carbon dioxide conversion system 10.

Referring to FIG. 2, in addition to the recirculation unit 127 that supplies recirculated by-product hydrogen to the positive electrode chamber 123, a hydrogen supply unit 125 may be provided to supply separate hydrogen. The hydrogen supply unit 125 may supply hydrogen directly or hydrogen in a form dissolved in an electrolyte to the positive electrode chamber 123. In addition to the hydrogen supply unit 125, an electrolyte supply unit (not shown) that supplies a separate electrolyte, such as potassium carbonate (K₂CO₃), to the positive electrode chamber 123 may be further included.

In addition, the carbon dioxide conversion system 10 may further include a second collection unit 129 that collects the discharge from the positive electrode chamber 123. The type of discharge collected by the second collection unit 129 may vary depending on the components supplied to the positive electrode chamber 123 through the recirculation unit 127.

The first separation unit 117 may include at least one selected from the group consisting of a gas-liquid separator, a gas purifier, an adsorption tower, an absorption tower, and a gas permeable membrane depending on the purpose, but is not limited thereto.

Among the materials discharged from the negative electrode chamber 113, the first separation unit 117 may separate the liquid phase of a material as the first component and the gas phase of a material as the second component. When the separated second component is supplied to the positive electrode chamber 123 to remove hydrogen, a high-purity gas product without hydrogen may be obtained in the second collection unit 129.

In another embodiment, the first separation unit 117 separates the desired product from the material discharged from the negative electrode chamber 113 as the first component and supplies it to the first collection unit 119 and separates hydrogen and unreacted carbon dioxide as the second component for reuse. FIG. 3 illustrates an embodiment of this carbon dioxide conversion system 10.

Referring to FIG. 3, the first component that has passed through the first separation unit 117 may include at least one selected from the group consisting of carbon monoxide (CO), formic acid (HCOOH), formaldehyde (HCHO), methanol (CH₃OH), methane (CH₄), and ethylene (C₂H₄), but is not limited thereto.

In addition, hydrogen and unreacted carbon dioxide separated as the second component in the first separation unit 117 may pass through the recirculation unit 127 and may be supplied to the positive electrode chamber 123. After hydrogen is removed through an oxidation reaction in the positive electrode chamber 123, unreacted carbon dioxide may be recirculated to the carbon dioxide supply unit 115. Since the supplied second component is composed of hydrogen and unreacted carbon dioxide, the purity of the unreacted carbon dioxide recirculated to the carbon dioxide supply unit 115 may be high.

Although omitted in FIG. 3, this type of carbon dioxide conversion system 10 may further include the hydrogen supply unit 125 that supplies hydrogen to the positive electrode chamber 123, as described above.

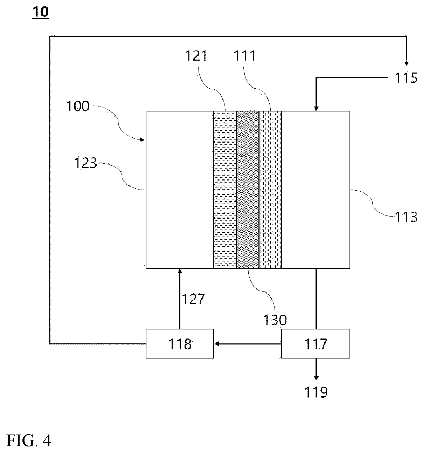

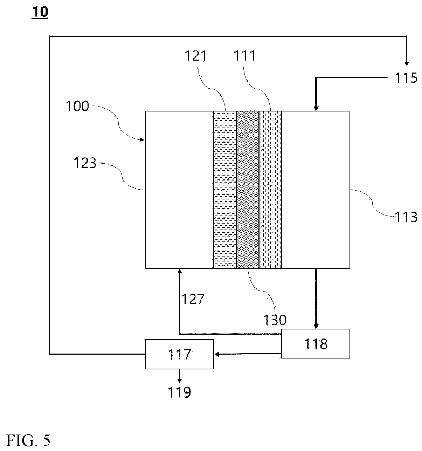

The carbon dioxide conversion system 10 may further include a second separation unit 118. FIGS. 4 and 5 illustrate an embodiment of this carbon dioxide conversion system 10.

Referring to FIG. 4, the carbon dioxide conversion system 10 may further include a second separation unit 118 that separates hydrogen and unreacted carbon dioxide. At this time, the first separation unit 117 may discharge hydrogen and unreacted carbon dioxide to the second separation unit 118 rather than the recirculation unit 127. The second separation unit 118 may supply separated hydrogen to the recirculation unit 127 and recirculate the separated unreacted carbon dioxide into the carbon dioxide supply unit 115. The recirculation unit 127 may supply hydrogen to the positive electrode chamber 123 from the second separation unit 118 rather than the first separation unit 117.

Referring to FIG. 5, the carbon dioxide conversion system 10 may further include a second separation unit 118 that separates hydrogen and other components. At this time, the second separation unit 118 may supply the separated hydrogen to the recirculation unit 127. The recirculation unit 127 may supply hydrogen to the positive electrode chamber 123 from the second separation unit 118 rather than the first separation unit 117. In addition, the second separation unit 118 may discharge other components into the first separation unit 117. The first separation unit 117 may separate the other components discharged from the second separation unit 118 into a first component including the desired product and a second component including unreacted carbon dioxide. The first separation unit 117 may supply the first component to the first collection unit 119 and recirculate the second component to the carbon dioxide supply unit 115.

Although omitted in FIGS. 4 and 5, this type of carbon dioxide conversion system 10 may further include the hydrogen supply unit 125 that supplies hydrogen to the positive electrode chamber 123, as described above.

Since carbon dioxide or carbon monoxide is not supplied to the positive electrode chamber 123 when this carbon dioxide conversion system 10 is used, a catalyst that is easily poisoned by carbon monoxide or carbon dioxide may be used as a catalyst of the positive electrode 121. For example, a platinum-based compound that is easily poisoned by carbon monoxide or carbon dioxide may be used as the catalyst of the positive electrode 121.

In this type of carbon dioxide conversion system 10, since products and unreacted carbon dioxide other than hydrogen are not supplied to the positive electrode chamber 123, the second collection unit 129 may be omitted.

The description of the present invention described above is for illustrative purposes, and those skilled in the art will understand that the present invention can be easily modified into other specific forms without changing the technical idea or essential features of the present invention. Therefore, the embodiments described above should be understood in all respects as illustrative and not restrictive. For example, each component described as single may be implemented in a distributed form, and likewise, each component described as distributed may be implemented in a combined form.

The scope of the present invention is indicated by the claims described below, and all changes or modified forms derived from the meaning and the scope of the claims and their equivalent concepts should be construed as being included in the scope of the present invention.

### <List of Reference Numerals>

10: Carbon dioxide conversion system 100: Electrolytic cell
111: Negative electrode 113: Negative electrode chamber
115: Carbon dioxide supply unit 117: First separation unit
118: Second separation unit 119: First collection unit
121: Positive electrode 123: Positive electrode chamber
125: Hydrogen supply unit 127: Recirculation unit
129: Second collection unit 130: Diaphragm

## Claims

1. A carbon dioxide conversion system comprising:
a negative electrode chamber in which a reduction reaction of carbon dioxide is performed; and
a positive electrode chamber in which an oxidation reaction of hydrogen is performed.

2. The system of claim 1, further comprising:
a carbon dioxide supply unit that supplies carbon dioxide to the negative electrode chamber;
a recirculation unit that supplies discharge from the negative electrode chamber to the positive electrode chamber; and
a diaphragm interposed between the negative electrode chamber and the positive electrode chamber.

3. The system of claim 1, further comprising:
a carbon dioxide supply unit that supplies carbon dioxide to the negative electrode chamber;
a first separation unit that separates discharge from the negative electrode chamber into a first component and a second component;
a first collection unit that collects the first component from the first separation unit;
a recirculation unit that supplies the second component from the first separation unit to the positive electrode chamber; and
a diaphragm interposed between the negative electrode chamber and the positive electrode chamber.

4. The system of any one of claims 1 to 3, wherein at least one selected from the group consisting of hydrogen, carbon monoxide, formic acid, formaldehyde, methanol, methane, and ethylene is generated in the negative electrode chamber.

5. The system of any one of claims 1 to 3, wherein the redox potential based on the standard electrode potential between the negative electrode chamber and the positive electrode chamber has an absolute value of 1.23 V or less.

6. The system of any one of claims 1 to 3, wherein the carbon dioxide supply unit supplies at least one selected from the group consisting of dry carbon dioxide, humidified carbon dioxide, and dissolved carbon dioxide.

7. The system of any one of claims 1 to 3, further comprising at least one of a hydrogen supply unit that supplies hydrogen to the positive electrode chamber and an electrolyte supply unit that supplies an electrolyte to the positive electrode chamber.

8. The system of any one of claims 1 to 3, further comprising a second collection unit that collects discharge from the positive electrode chamber.

9. The system of claim 3, wherein the first separation unit includes at least one selected from the group consisting of a gas-liquid separator, a gas purifier, an adsorption tower, an absorption tower, and a gas permeable membrane.

10. The system of claim 3, wherein the first separation unit discharges hydrogen and unreacted carbon dioxide as the second component, and the discharge from the positive electrode chamber is recirculated to the carbon dioxide supply unit.

11. The system of claim 3, further comprising a second separation unit that separates hydrogen and unreacted carbon dioxide,
wherein the first separation unit discharges hydrogen and unreacted carbon dioxide to the second separation unit,
the second separation unit supplies the hydrogen to the recirculation unit,
the second separation unit recirculates the unreacted carbon dioxide to the carbon dioxide supply unit, and
the recirculation unit supplies the hydrogen from the second separation unit to the positive electrode chamber.

12. The system of claim 3, further comprising a second separation unit that separates hydrogen and other components from the discharge of the negative electrode chamber,
wherein the second separation unit supplies the hydrogen to the recirculation unit,
the recirculation unit supplies the hydrogen from the second separation unit to the positive electrode chamber,
the second separation unit discharges the other components to the first separation unit,
the first separation unit separates the discharge from the second separation unit into a first component and a second component, and
the first separation unit recirculates unreacted carbon dioxide to the carbon dioxide supply unit.
